**Europäisches Patentamt**

**European Patent Office**

**Office européen des brevets**

(19)

(11) **EP 1 296 461 A2**

## (12) EUROPEAN PATENT APPLICATION

(43) Date of publication:
**26.03.2003 Bulletin 2003/13**

(51) Int Cl.7: **H04B 1/707**

(21) Application number: **02102086.2**

(22) Date of filing: **01.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **01.08.2001 US 309420 P**

(71) Applicant: **Texas Instruments Incorporated Dallas, Texas 75251 (US)**

(72) Inventor: **Sriram, Sundarajan Plano Texas 75075 (US)**

(74) Representative: **Holt, Michael et al Texas Instruments Ltd., EPD MS/13, 800 Pavilion Drive Northampton Business Park, Northampton NN4 7YL (GB)**

(54) **CDMA despreading using QPSK rotated PN sequences**

(57)      Pseudo-noise code modulated QPSK signals are correlated with a rotated version of the conjugate pseudo-noise code to lessen computational complexity. The rotation emulates a phase shift in the transmission channel, and the rotation is removed without computation by channel estimation.

### Figure 1

**Description**

BACKGROUND OF THE INVENTION

1. Field of the invention

The invention relates to communications, and more particularly to spread spectrum digital communications and related systems and methods.

2. Background

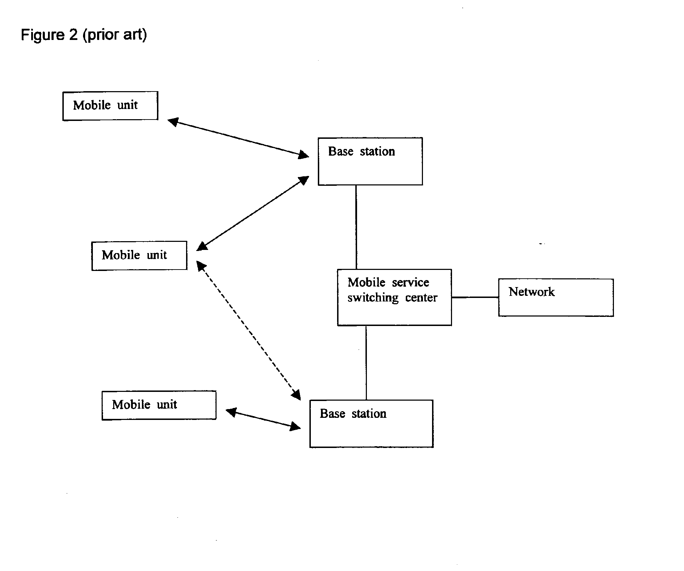

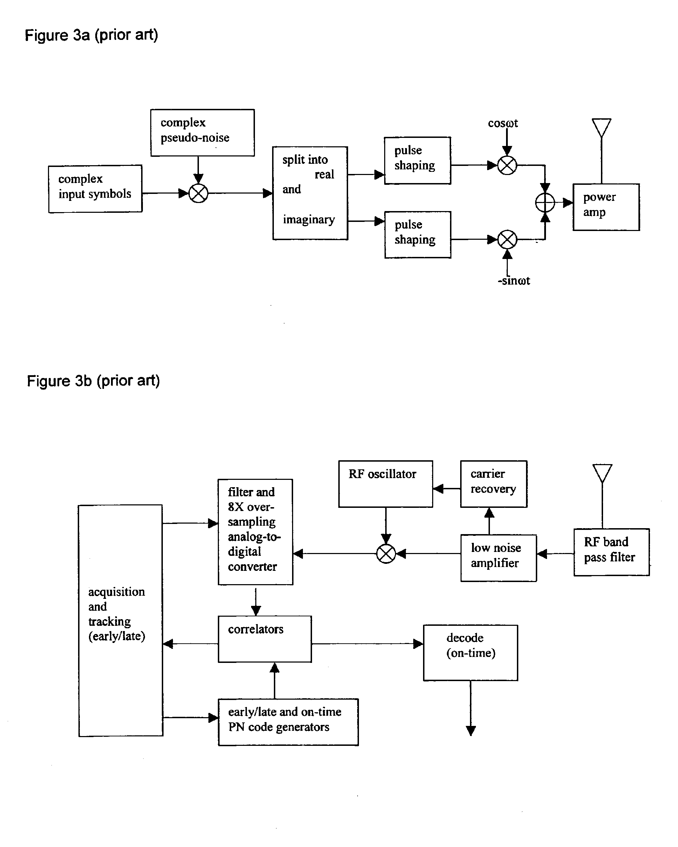

Spread spectrum wireless communications utilize a radio frequency bandwidth greater than the minimum bandwidth required for the transmitted data rate, but many users may simultaneously occupy the bandwidth (multiple access). Each of the users has a pseudo-random code for "spreading" information to encode it and for "despreading" (by correlation) the spread spectrum signal for recovery of the corresponding user's information. Figure 2 heuristically shows a portion of a wireless cellular system with base stations wirelessly communicating with mobile units, and Figures 3a-3b illustrate spread spectrum signals with a QPSK (quadrature phase-shift keying) modulation encoder and decoder. The multiple access is typically called code division multiple access (CDMA).

The pseudo-random code may be an orthogonal (Walsh) code, a pseudo-noise (PN) code, a Gold code, or combinations (modulo-2 additions) of such codes. After despreading the received signal at the correct time instant, the user recovers the corresponding information while the remaining interfering signals appear noise-like. For example, the interim standard IS-95 for such CDMA communications employs channels of 1.25 MHz bandwidth and a code pulse interval (chip) $T_c$ of 0.8138 microsecond with a transmitted symbol (bit) lasting 64 chips. The recent wideband CDMA (WCDMA) proposal employs a 3.84 MHz bandwidth and the CDMA code length applied to each information symbol may vary from 4 chips to 256 chips. The CDMA code for each user is typically produced as the modulo-2 addition of a Walsh code with a pseudo-random code (two pseudo-random codes for QPSK modulation) to improve the noise-like nature of the resulting signal. A cellular system as illustrated in Figure 2 could employ IS-95 or WCDMA for the air interface between the base station and the mobile units.

A spread spectrum receiver synchronizes with the transmitter by code acquisition followed by code tracking. Code acquisition performs an initial search to bring the phase of the receiver's local code generator to within typically a half chip of the transmitter's, and code tracking maintains fine alignment of chip boundaries of the incoming and locally generated codes. Conventional code tracking utilizes a delay-lock loop (DLL) or a tau-dither loop (TDL), both of which are based on the well-known early-late gate principle. Figures 3a-3b show the basic blocks of possible transmitters and receivers.

In a multipath situation a RAKE receiver has individual demodulators (fingers) tracking separate paths and combines the results to improve signal-to-noise ratio (SNR), typically according to a method such as maximal ratio combining (MRC) in which the individual detected signals are synchronized and weighted according to their signal strengths. A RAKE receiver usually has a DLL or TDL code tracking loop for each finger together with control circuitry for assigning tracking units to received signal paths. Figure 5 illustrates a receiver with N fingres.

The UMTS (universal mobile telecommunications system) approach UTRA (UMTS terrestrial radio access) provides a spread spectrum cellular air interface with both FDD (frequency division duplex) and TDD (time division duplex) modes of operation. UTRA currently uses radio frames of 10 ms duration and partition each frame into 15 time slots with each time slot consisting of 2560 chips. In FDD mode the base station and the mobile user transmit on different frequencies, whereas in TDD mode a time slot may be allocated to transmissions by either the base station (downlink) or a mobile user (uplink). In addition, TDD systems are differentiated from the FDD systems by the presence of interference cancellation at the receiver. The spreading gain for TDD systems is small (e.g., 8-16), and the absence of the long spreading code implies that the multi-user multipath interference does not look Gaussian and needs to be canceled at the receiver.

In currently proposed UTRA FDD mode the uplink dedicated physical data channels (DPDCH$_n$) and the dedicated physical control channel (DPCCH) are spread using real channelization codes and some DPDCH$_n$ are added to form the in-phase stream plus some (optionally) DPDCH's and the DPCCH are added to form the quadrature stream. Then scramble (with a complex scrambling code) the resulting complex stream and use it to modulate the transmission. The channelization codes separate the physical channels, and the scrambling code separates cells. DPCCH contains pilot bits.

In contrast, for the downlink the dedicated physical channel DPCH effectively includes DPDCH and DPCCH as time-multiplexed fields in a time slot with a portion of the DPCCH bits as pilot bits. Serial-to-parallel convert the DPCH bits to I and Q streams and apply the same real channelization codes to spread. Next, complex add and apply a complex scrambling code, scale with a gain factor and then add a scaled synchronization channel to use the resulting sum stream to modulate the transmission.

For TDD mode a physical channel is a burst (data, midamble, and guard) in a particular time slot in a frame. The physical synchronization channels essentially provide pilot symbols. For spreading apply complex channelization codes which separate the physical channels, and then add and apply a length-16 scrambling code. Use the resulting scrambled complex sum to modulate the transmission.

SUMMARY OF THE INVENTION

The present invention provides a receiver for complex-modulated code-division encoded signals which uses a complex rotation of a complex pseudo-noise code for correlations.

This has advantages including simpler arithmetic operations for acquiring, tracking, and/or decoding various CDMA (code division multiple access) wireless signals.

BRIEF DESCRIPTION OF THE DRAWINGS

The drawings are heuristic for clarity.

Figure 1 shows a preferred embodiment receiver.
Figure 2 illustrates a cellular system.
Figures 3a-3b illustrate a transmitter and a receiver.
Figure 4 shows PN rotation

DETAILED DESCRIPTION OF THE PREFERRED EMBODIMENTS

1. Overview

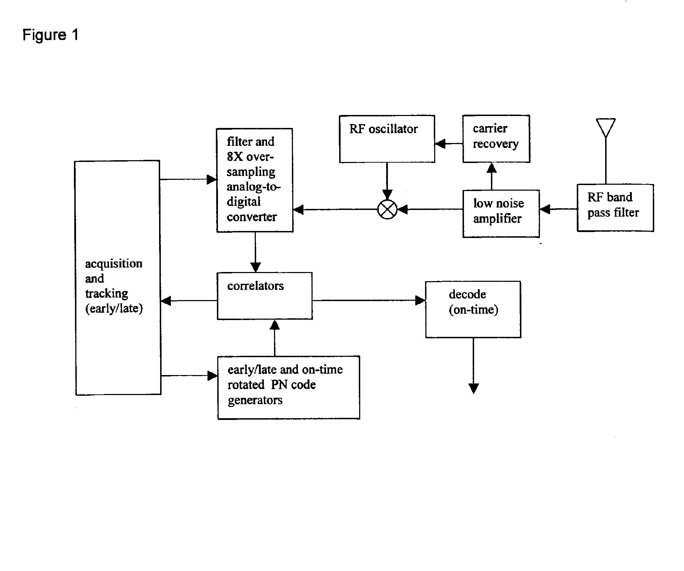

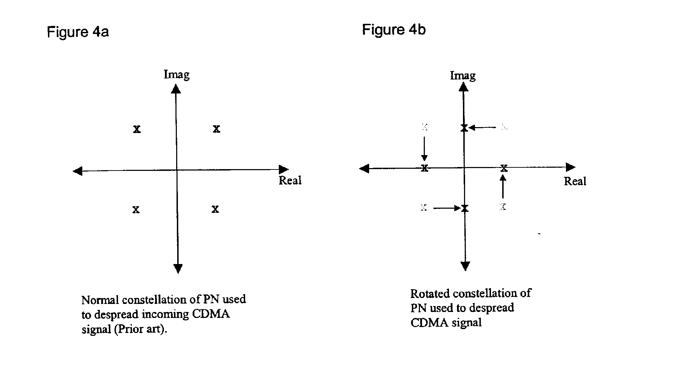

Preferred embodiment spread spectrum communication systems incorporate preferred embodiment despreading methods. Preferred embodiment despreading methods apply to QPSK (quadrature phase shift keying) modulated CDMA (code division multiple access) encoded signals and for synchronization acquisition and tracking and for decoding the methods insert a $\pi/4$ rotation in the complex pseudo-noise portion of the encoding; see the receiver of Figure 1. Figure 4 illustrates the $\pi/4$ rotation. This $\pi/4$ rotation reduces correlation arithmetic operations by essentially replacing a complex multiplication by $1+j$ with a multiplication by 1 or j. On average this saves two additions and one sign change per multiplication at the cost of a corresponding $\pi/4$ rotation in the transmission channel fading parameter. However, the channel fading parameter estimation using pilot symbols absorbs the $\pi/4$ rotation and avoids any compensating computation to undo the $\pi/4$ rotation.

Preferred embodiment communications systems base stations and mobile users could each include one or more application specific integrated circuits (ASICs), (programmable) digital signal processors (DSP's), and/or other programmable devices with stored programs for performance of the signal processing of the preferred embodiment methods. The base stations and mobile users may also contain analog integrated circuits for amplification of inputs to or outputs from antennas and conversion between analog and digital; and these analog and processor circuits may be integrated on a single die. The stored programs may, for example, be in onboard or external ROM, flash EEPROM or FeRAM. The antennas may be parts of RAKE detectors with multiple fingers for each user's signals. The DSP core could be a TMS320C6xxx or TMS320C5xxx from Texas Instruments.

2. First preferred embodiments

Figure 1 illustrates first preferred embodiment receivers and despreading methods. To explain the receivers and methods, first consider the simple case of a single pseudo-noise code with QPSK modulation as illustrated by the transmitter and receiver of Figures 3a-3b. In particular, presume an input sequence of symbols $\mathbf{d}(k)$ where each symbol $\mathbf{d}(k)$ has two components: $d_1(k)$ and $d_2(k)$; for notational convenience a symbol is expressed as a complex number $d_1(k) + jd_2(k)$. Similarly, presume a complex pseudo-noise code $\mathbf{PN}(n) = PN_1(n) + jPN_2(n)$ where each component is from the set $\{-1,1\}$ and the variable n indicates chip number. Thus the pseudo-noise code applied to a symbol $\mathbf{d}(k)$ yields the product sequence of chips $\mathbf{d}(k)\mathbf{PN}(n) = d_1(k)PN_1(n) - d_2(k)PN_2(n) + j[d_1(k)PN_2(n) + d_2(k)PN_1(n)]$ for $1 \leq n \leq N$ where N is the spreading factor (number of chips per symbol) and typically would equal some (small) integral power of 2. The real and imaginary parts of this sequence are then used for the in-phase and quadrature modulation (i.e., carriers $\cos\omega t$ and $-\sin\omega t$, respectively) after any chip pulse wave-shaping; see Figure 3a. With p(t) denoting a chip pulse such as a root-raised cosine, the transmitted signal is thus $\mathrm{Re}\{G\mathbf{d}(k)\mathbf{PN}(n)p(t)e^{j\omega t}\}$ where G denotes the gain applied by the transmitter power amplifier.

The attenuation and phase shift (fading) of the transmission channel effectively multiplies the transmitter output by a complex fading parameter (gain) $\alpha = |\alpha|e^{j\phi}$; that is, a receiver sees the signal $Re\{G\mathbf{d}(k)\mathbf{PN}(n)p(t)e^{j\omega t}\alpha\}$. This channel fading parameter will essentially be constant over a short time interval, such as a frame of 10 milliseconds (e.g., 38400 chips at a chip rate of 3.84 Mcps).

The conventional receiver of Figure 3b, after carrier recover (up to a phase), acquires chip synchronization and tracks it by early-late correlations using $\mathbf{PN}^*$ (complex conjugate of $\mathbf{PN}$); this relies on the fact that $\mathbf{PN}(n)\mathbf{PN}^*(n) = 2$ for all n but $\mathbf{PN}(m)\mathbf{PN}^*(n)$ for m≠n is pseudo-random. With synchronization the decoding on-time correlation yields $G\mathbf{d}(k)\alpha$. To estimate the channel fading parameter plus gain, $G\alpha$, the receiver similarly acquires and decodes a separate pilot signal transmission $Re\{G\mathbf{d}(k)\mathbf{PN}(n)p(t)e^{j\omega t}\}$ where $\mathbf{d}(k)$ is a kown constant sequence of symbols, and uses this channel estimate to then recover the data symbols $\mathbf{d}(k)$ as $G\mathbf{d}(k)\alpha./ G\alpha$.

In more detail, a correlation by $\mathbf{PN}^*$ consists of complex multiplications by $\pm1\pm j$ plus complex additions. Looking at the four possible values for $\mathbf{PN}(n)$:

$(1+ j) (x + jy) = x - y + j (x + y)$ has one sign change, -y, and two additions, x + (-y) and x + y;
$(-1 + j)(x + jy) = -x -y + j j(x - y)$ has three sign changes and two additions;
$(1- j) (x + jy) = x + y + j (-x + y)$ has one sign change and two additions; and
$(-1 - j) (x + jy) = -x + y + j (-x - y)$ has three sign changes and two additions.

Thus the average multiplication has two additions and two sign changes.

As illustrated in Figure 1, the first preferred embodiments follow the foregoing steps of decoding except they modify the correlations with $\mathbf{PN}^*$ by a preliminary complex multiplication of the $\mathbf{PN}^*(n)$ by $(1+ j)/2$ $(=e^{j\pi/4}/\sqrt{2})$. This may be interpreted as a rotation of $\mathbf{PN}^*$ by $\pi/4$ plus scaling by $\sqrt{2}$; see Figure 4. Thus the preferred embodiment simplify the correlations to complex multiplications by $\pm1$ and $j$. In particular, the four possibilities become:

$1(x + jy) = x + jy$, with no sign changes and no additions;
$-1(x + jy) = -x + j(-y)$ which has two sign changes and no additions;
$j(x + jy) = -y + jx$ which has one sign change and no additions; and
$-j (x + jy) = y +j(-x)$ which has one sign change and no additions.

The correlations of the pilot signal with the rotated PN sequence to estimate the channel fading parameter also include the rotation by $\pi/4$, and hence the rotation factor may be absorbed into the channel fading parameter estimate. That is, the normal channel fading parameter $\alpha = |\alpha|e^{j\phi}$ is replaced with $\alpha = |\alpha|/\sqrt{2} e^{j\phi+\pi/4}$. The pilot signal channel estimation compensates for the rotation by estimating the channel to be $\alpha = |\alpha|/\sqrt{2} e^{j\phi+\pi/4}$ since channel estimation also employs the rotated PN sequence. Consequently, the PN rotation introduces no extra computation as compared to using the conventional PN sequence. As a consequence, the preferred embodiments using the rotated $\mathbf{PN}^*$ in the correlations save two additions and an average of one sign change for each complex multiplication without any change in the output result.

Further, the conventional correlations require a precision increase of 1 bit due to the additions. The preferred embodiments avoid this 1-bit increase which is an artifact of the conventional correlation approach.

Note that three other rotations of $\mathbf{PN}^*$ equivalently simplify the complex multiplications; namely, rotations by $-\pi/4$, $3\pi/4$, and $-3\pi/4$.

3. Second preferred embodiments

The second preferred embodiments also rotate a complex pseudo-noise code in conjunction with a channelization code for despreading correlations with QPSK signals. In particular, presume data bit stream d(k) is spread to the chip rate with real channelization code $c_d$ and pilot bit stream d(k) is spread with real channelization code $c_c$; where both the bits and codes have values $\pm1$. Then the coded data and pilot bit streams are weighted by factors $\beta_d$ and $\beta_c$, respectively, and combined to form a chip-rate complex stream

$$z(n) = \beta_d c_d(n) d(k) +j \beta_c c_c(n) d(k).$$

Scramble $\mathbf{z}$ by multiplication by complex pseudo-noise scrambling code $\mathbf{PN}$, which has values $\pm1\pm j$, to yield complex stream $\mathbf{x}$ by $\mathbf{x}(n) = \mathbf{z}(n) \mathbf{PN}(n)$. Then use $\mathbf{x}$ for carrier modulation to have the transmitter output $Re\{G\mathbf{x}p(t)e^{j\omega t}\}$ where G is the power amplifier gain, p(t) represents the chip pulse shape, and $\omega$ is the carrier radian frequency.

Second preferred embodiment receivers see the incoming signal $Re\{G\mathbf{x}p(t)e^{j\omega t}\alpha\}$ where, as in the foregoing, $\alpha$ is the transmission channel fading parameter. Then the receiver decodes by estimating the channel fading parameter through correlations with rotated **PN\*** $c_c$ plus estimating the data through correlations with rotated **PN\*** $c_d$. As in the first preferred embodiments, rotated **PN\*** is chipwise multiplication of **PN**\*(n) by (1+ j)/2 (=$e^{j\pi/4}/\sqrt{2}$) so the values of rotated **PN\***, rotated **PN\***$c_c$, and rotated **PN\***$c_d$ are all in the set {1, j,-1,-j} and thus the correlations again simplify by eliminating additions in the complex multiplications. Also as in the first preferred embodiments, the rotation of **PN\*** effectively appears as part of $\alpha$, and the channel estimate compensates for the rotation without any increase in computation. In more detail, after carrier removal the correlations of G$\mathbf{x}\alpha$ with rotated **PN\*** $c_c$ for each bit is a sum of N terms:

$$\Sigma_n \; G \; \{\beta_d \; c_d(n) \; d(k) + j \; \beta_c \; C_c(n) \; d(k)\} \; PN(n) \; \alpha \; e^{j\pi/4}/\sqrt{2} \; PN^*(n)c_c(n)$$

Using **PN**(n) **PN**\*(n) = 2 and the orthogonality of the channelization codes yields N jG $\beta_c d(k)$ $2e^{j\pi/4}/\sqrt{2}$ $\alpha$. Similarly, the correlations with rotated **PN\*** $c_d$ yield N jG $\beta_d$ d(k) $2e^{j\pi/4}/\sqrt{2}$ $\alpha$, so the data bits are recovered.

UTRA FDD mode uplink can transmit the physical control channel plus up to six physical data channels by using more real channelization codes and adding some coded data channels plus weighting to form the real part of **z** and adding the remaining coded data channels plus weighting together with the coded pilot channel plus weighting to form the imaginary part of **z.** The channelization codes have a spreading factor from 1 to 16, depending on the number of mobiles in the cell and separate the mobiles. Then apply the complex scrambling code **PN** derived from a Gold code to **z** to yield the modulation factor. The scrambling code separates cells.

UTRA FDD mode downlink analogously spreads data-pilot physical channels (although the data and pilot bits are actually time multiplexed in a single dedicated physical channel, DPCH) and additionally has synchronization physical channels with synchronization codes. Again, correlating with a rotated conjugate scrambling code times the channelization code (rotated **PN\*** $c_{ch}$) yields time-multiplexed data and pilot bits multiplied by the rotated fading parameter ($e^{j\pi/4}/\sqrt{2}$ $\alpha$), so again the data bits can be recovered.

**Claims**

**1.**   A method for receiving pseudo-noise code QPSK-modulated signals, comprising:

   (a) receiving a pseudo-noise code QPSK-modulated signal; and
   (b) correlating said signal with a complex-rotated version of a conjugate of said pseudo-noise code.

**2.**   A receiver for pseudo-noise code QPSK-modulated signals, comprising:

   (a) an input for receiving a pseudo-noise code QPSK-modulated signal; and
   (b) a correlator coupled to said input, said correlator including a complex-rotated version of a conjugate of said pseudo-noise code.

**3.**   A method for receiving pseudo-noise code QPSK-modulated signals, comprising

   (a) using a rotated PN sequence which entails the following mapping:

| Conventional QPSK PN Bit | PN Bit of this claim |
| --- | --- |
| 1 + j | j |
| +1 -j | 1 |
| -1 -j | -j |
| -1 + j | -1 |

   (b) whereby this transformation corresponds to rotation of the PN constellation counter-clockwise by $\pi/4$ and scaling by a factor of $1/\sqrt{2}$, and this rotation can also be by an angle of - $\pi/4$, $3\pi/4$, and -$3\pi/4$.

**4.**   The method of claim 3, wherein:

   (a) the rotated PN is used to despread the received CDMA signal, as well as to estimate the channel coefficient.
   (b) whereby advantages obtained include:

- two addition operations and one sign change operation are saved.
- one bit of precision in the datapath may be reduced due to the scaling; this saves silicon area.

Figure 1

Figure 2 (prior art)

Figure 3a (prior art)

```
            ┌──────────────┐
            │   complex    │
            │ pseudo-noise │
            └──────┬───────┘
                   │
┌──────────────┐   ▼                ┌──────────┐
│   complex    │  ⊗    ┌──────────┐ │  pulse   │         cosωt
│ input symbols│─────► │split into│ │ shaping  │           │
└──────────────┘       │    real  │─┤          │──┐        ▼
                       │ and      │ └──────────┘  │       ⊗        ┌────────┐
                       │ imaginary│ ┌──────────┐  ├──────►⊕───────►│ power  │
                       └──────────┘ │  pulse   │  │       ⊗        │  amp   │
                                    │ shaping  │──┘        ▲        └────────┘
                                    └──────────┘           │
                                                        -sinωt
```

Figure 3b (prior art)

```
                              ┌──────────────┐   ┌──────────┐   ┌──────────┐
                              │ RF oscillator│   │  carrier │
                              │              │   │ recovery │
                              └──────────────┘   └──────────┘
┌───────────┐  ┌────────────┐
│           │  │ filter and │
│           │  │ 8X over-   │
│           │  │ sampling   │        ⊗         ┌──────────┐   ┌──────────┐
│acquisition│  │ analog-to- │                  │low noise │   │ RF band  │
│ and       │◄─┤ digital    │◄──────⊗◄─────────│amplifier │◄──│pass filter│
│ tracking  │  │ converter  │                  └──────────┘   └──────────┘
│(early/late)│ └─────┬──────┘
│           │        ▼
│           │  ┌──────────┐              ┌──────────┐
│           │◄─│correlators│────────────►│ decode   │
│           │  │          │              │(on-time) │
└───────────┘  └────┬─────┘              └─────┬────┘
      │             ▲                          │
      │       ┌─────┴─────────┐                ▼
      └──────►│ early/late and│
              │ on-time       │
              │ PN code       │
              │ generators    │
              └───────────────┘
```

Figure 4a

Figure 4b

Imag

Imag

x          x

Real

x          x

Real

Normal constellation of PN used
to despread incoming CDMA
signal (Prior art).

Rotated constellation of
PN used to despread
CDMA signal